# EUROPEAN PATENT SPECIFICATION

(11) **EP 3 965 408 B1**
(45) Date of publication and mention of the grant of the patent: **10.01.2024**
(21) Application number: 20194703.3
(22) Date of filing: 04.09.2020
(51) Int. Cl.: H04M 11/06, H04L 12/10, H04L 12/28, H04L 12/12

(54) **METHOD AND COMMUNICATION SYSTEM FOR A POWER-SAVING OPERATION OF A SUBSCRIBER LINE**
VERFAHREN UND KOMMUNIKATIONSSYSTEM ZUM ENERGIESPARENDEN BETRIEB EINER TEILNEHMERANSCHLUSSLEITUNG
PROCÉDÉ ET SYSTÈME DE COMMUNICATION POUR UNE OPÉRATION D'ÉCONOMIE D'ÉNERGIE D'UNE LIGNE D'ABONNÉ

(43) Date of publication of application: 09.03.2022
(73) Proprietor: Deutsche Telekom AG, 53113 Bonn (DE)
(72) Inventor: QUADE, Michael, 53340 Meckenheim (DE)
(74) Representative: Blumbach · Zinngrebe Patentanwälte PartG mbB

(56) References cited:
- WO-A1-2018/006084
- CN-A- 110 677 745
- US-A1- 2004 041 697
- US-A1- 2020 100 157

## Description

### Technical field of the invention

The present invention is directed to a method for a power-saving operation of a subscriber line and a communication system for enabling a power-saving operation of a subscriber line, wherein the subscriber line may be an xDSL subscriber line or an optical fiber.

### Background of the invention

Digital Subscriber Line (DSL) technology is deployed to provide digital broadband access to the Internet for example using a local telephone line.

In order to reduce the total power of xDSL connections an energy-efficient dynamic spectrum management (DSM), called green DSL, has been developed. The power reduction is achieved by adjusting the data rate to a minimum with the drawback that, for example, VoIP calls may be conducted only with poor quality.

### Summary of the invention

It is an object of the present invention to provide a method and a communication system, which enable a power-saving operation of a subscriber line without decreasing the Quality of Service. According to a further aspect the method and the communication system allows a user to initiate a VoIP session to a called party or receive a VoIP call from a calling party even if the user's subscriber line is currently deactivated.

The technical problem mentioned above is solved by the steps of method claim 1 and by the features of the communication system according to claim 9.

Preferred embodiments are set forth in the dependent claims.

### Brief description of the drawings

The invention is described below by way of example in connection with the accompanying drawings, wherein:
- Figure 1: shows an exemplary communication system, in which the invention is implemented,
- Figure 2: shows a flow diagram illustrating the process of activating a deactivated DSLAM in case of a user's Internet desire,
- Figure 3: shows a flow diagram illustrating the process of initiating a VoIP session at the user end device if the user's xDSL subscriber line is still deactivated, and
- Figure 4: shows a flow diagram illustrating a process of calling a user if the user's xDSL subscriber line is still deactivated.

### Detailed description of the invention

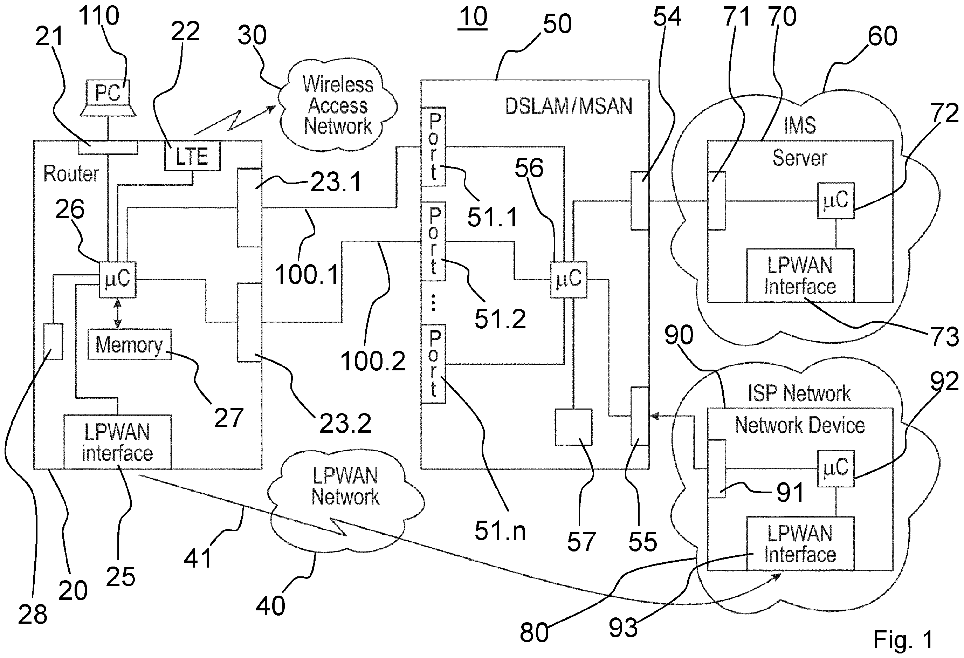

Referring now to Figure 1, communication system 10 according to claim 9 is depicted which is configured to enable a power-saving operation of at least one subscriber line, wherein the at least subscriber line may be an xDSL subscriber line or an optical fiber.

The communication system 10 comprises a wide-area wireless network 40, which is implemented as a low-power wide-area radio (LPWAN) network. The exemplary LPWAN network 40 is a type of a wireless telecommunication wide area network designed to allow long-range communications at a low bit rate and at low power. The illustrative LPWAN network 40 supports low-power wide-area network protocols such as LoRaWAN (LoRaWAN: Long Range Wide Area Network) developed by Semtech (see URL: https://en.wikipedia.org/wiki/LoRa). Alternatively, the LPWAN network may be based on the Narrowband Internet of Things (NB-IoT) which is a low-power wide area network radio technology standard developed by 3GPP (Third Generation Partnership Project).

Moreover, the communication system 10 comprises a network device 90, which may constitute a physical server of an Internet service provider, that may operate an own ISP network 80. The network device 90 includes a communication interface 91 and a wireless network interface 93 configured to communicate via the wide-area wireless network 40. The wireless network interface 93 is implemented as a low-power radio network interface using a low-power wide-area network protocol, e.g. the LoRaWAN network protocol. In the following, thus interface 93 may be called a LPWAN interface. In addition, the network device 90 may include a control unit 92, which may be implemented as a microcontroller configured to control and monitor the functions of the network device 90.

Furthermore, the communication system 10 comprises at least one customer router 20, which may be implemented as an Integrated Access Device (IAD), which may include a conventional xDSL modem. The customer router 20 may comprise at least a first xDSL access interface 23.1 and the customer router 20 comprises a wireless network interface 25, which may be implemented each as a physical and/or software component. Interface 25 is configured to communicate via the wide-area wireless network 40 with the network device 90. The wireless network interface 25 is a low-power radio network interface using a low-power wide-area network protocol, e.g. the LoRaWAN network protocol. In the following, thus interface 25 is called a LPWAN interface.

In the preferred embodiment as shown in Fig. 1 the customer router 20 may comprise two access interfaces, namely xDSL access interface 23.1 and an xDSL access interface 23.2. It is to be noted, that alternatively the access interfaces 23.1 and 23.2 may be implemented as optical access interfaces. Furthermore, the customer router 20 may comprise a communication interface 21 configured to connect to a user end device 110. The user end device 110 may be a personal computer including, for example, a softphone and a Session Initiation Protocol (SIP) user agent client/server configured to establish and receive for example VoIP sessions. For example, the SIP is described by Gerd Siegmund in the text book "Technik der Netze 2", 6. Auflage, Chapter 8, 2009, Hüthig Verlag. The personal computer 110 may be connected via a cable to communication interface 21 of the customer router 20. Communication interface 21 may be implemented according to an Ethernet standard. In addition to communication interface 21 or alternatively, the customer router 20 may comprise a Wi-Fi interface (not shown) which may be configured to communicate with a user end device via a wireless connection.

Moreover, the customer router 20 may include a control unit 26 configured to preferably control and monitor the functions of the customer router 20. A memory 27 may be implemented at the router 20 for storing e.g. data and/or instructions and/or application programs. In addition, at least one senor, e.g. a motion sensor 28 may be implemented at the customer router 20 for detecting a movement of the user.

In addition, the system 10 comprises at least one access network device 50, which may be implemented as a digital subscriber line access multiplexer (DSLAM) or an multi-service access node (MSAN). In the preferred embodiment, it is assumed, that the access network device 50 constitutes a DSLAM. The DSLAM 50 may comprise at least one xDSL port 51.1 and a communication interface 55 configured to communicate with the communication interface 91 of the network device 90. In the preferred embodiment, the DSLAM 50 may comprise two xDSL ports, namely the xDSL port 51.1 and and xDSL port 51.2. In addition, the DSLAM 50 may comprise a control unit 56 which may be implemented as a microcontroller configured to control and monitor the functions of the DSLAM 40. It should be noted, that the xDSL ports 51.1 and 51.2 as well as the interfaces illustrated herein may be implemented as physical and/or software components.

The communication system 10 may further comprise at least one xDSL subscriber line 100.1, which is terminated by the xDSL access interface 23.1 of the customer router 20 and by the first xDSL port 51.1 of the DSLAM 50. In the preferred embodiment, a second xDSL subscriber line 100.2 may be implemented which is terminated by the xDSL access interface 23.2 of the customer router 20 and by the xDSL port 51.2 of the DSLAM 50.

The exemplary DSLAM 50 is configured to deactivate the xDSL port 51.1 and, if implemented, the xDSL port 51.2 in response to a time scheduler and/or in response to a predefined event. A respective time scheduler may be is stored in a memory 57 of the DSLAM 50. For example, the DSLAM 50 and in particular the microcontroller 56 may be configured to detect a predefined event, which causes the access network device 50 to deactivate the xDSL port 50.1 and/or, if available, the xDSL port 51.2. Such a predefined event may be a user-based behavior such as the termination of an Internet session or a VoIP session, which may be detected by the access network device 50.

The customer router 20 may be configured to trigger activation or reactivation of a deactivated xDSL subscriber line, e.g. the xDSL subscriber line 100.1 and/or, if implemented xDSL subscriber line 100.2., if needed by the user. This is done for example by transmitting a request message for activating xDSL port 51.1 of the access network device 50 via wireless network interface 25 to the network device 90. In particular, the control unit 26 is configured to cause the customer router 20 to transmit such a request message. In addition, the network device 90 may be configured to generate an xDSL port activating signal in response to the request message received from the customer router 20 and to transmit the xDSL port activating signal via its communication interface 91 to the access network device 50. The communication interfaces 55 and 91 can be connected via an electrical cable, an optical fiber or via a wireless connection.

The control unit 56 of the access network device 50 may be configured to process and interpret the xDSL port activating signal to cause the DSLAM 50 to activate or reactivate the xDSL port 51.1 such that the xDSL subscriber line 100.1 will become available for data transmission between the customer device 20 and the access network devise 50.

In a preferred embodiment, the request message transmitted by the customer router 20 may include information of the customer router 20 and/or the user and/or the xDSL interface 23.1 and/or the xDSL interface 23.2, which allows the network device 90 to generate a specific xDSL port activating signal which in turn carries information indicating to the access network device 50 which deactivated xDSL port or ports, e.g. xDSL port 51.1 and/or xDSL port 51.2 should be activated. It should be noted, that a plurality of xDSL ports 51.1 to 51.n may be implemented in the DSLAM 50 which may be associated with different customer routers.

In addition, the preferred communication system 10 may include an IP-based communication subsystem 60, which may be implemented as the Internet Multimedia Subsystem (IMS). For example, the Internet multimedia subsystem is described by Gerd Siegmund in the text book "Technik der Netze 2", 6. Auflage, Chapter 10, 2009, Hüthig Verlag.

In a preferred embodiment, the customer router 20 may be configured to transmit signaling messages, for example Session Initiation Protocol (SIP) messages generated by the personal computer 110, via its LPWAN interface 25 to the IP-based communication subsystem 60. The IP-based communication subsystem is preferably configured to provide multimedia services like Voice over IP (VoIP). In the preferred embodiment, a physical server 70 is associated with the IP-based communication subsystem 60. The server 70 may provide and support IP-based multimedia services like VoIP and may comprise a wireless network interface 73 configured to receive signaling messages from the customer router 20. In the preferred embodiment, the wireless network interface 73 may be implemented as a low-power radio network interface configured to support a low-wide-area network protocol such as the LoRaWAN network protocol. Therefore, interface 73 may be called a LPWAN interface configured to communicate via the LPWAN network 40. The server 70 of the IP-based communication subsystem 60 may be further configured to transmit signaling messages, for example SIP messages received for example from a calling device 120, via its wireless network interface 73 to the customer router 20, which in turn is configured to receive the signaling messages from the IP-based communication subsystem 60 and the server 70, respectively. With other words: Signaling messages may be exchanged between the customer router 20 and the server 70 of the IP-based communication system 60 via the LPWAN network 40 as shown in Figure 1. It should be noted, that the process of transmitting signaling messages over the LPWAN network 40 to be exchanged between the customer router 20 and the IP-based communication subsystem 60 enables the user of the personal computer 110 to initiate a VoIP session or receive a VoIP call, even if the xDSL subscriber line 100.1 is deactivated or not available at all.

As mentioned above, the access network device 50 is also configured to deactivate the xDSL port 51.2 terminating the xDSL subscriber line 100.2. Furthermore, the customer router 20 is configured to transmit a request message for activating xDSL port 51.2 via its LPWAN interface 25 to the network device 90. The network device 90 in turn is configured to generate a port activating signal with respect to the second xDSL port 51.2 in response to the request message received from the customer router 20 and to transmit via its communication interface 91 the port activating signal with respect to the second xDSL port 51.2 to the access network device 50. Now the access network device may be configured to activate the xDSL port 50.2 and in a similar manner as described in detail with respect to the xDSL port 51.1.

In an alternative preferred embodiment of the communication system 10, the at least one access interface 23.1 of customer router 20 may be implemented as an optical access interface which constitutes an optical network termination (ONT) of an optical fiber according to the Fiber to Home (FTTH) technology used to connect the customer device 20 to access network device 50. In this embodiment, the subscriber line 100.1 and, if implemented, the subscriber line 100.2 constitute each an optical fiber.

Therefore, the access network device 50 can be implemented as an MSAN device, which may comprise at least one optical port 51.1, which constitutes an optical line termination (OLT) and the communication interface 55 configured to communicate with the communication interface 91 of the network device 90. In a preferred embodiment, the MSLAN 50 may comprise two optical ports, namely optical port 51.1 and optical port 51.2. In addition, the MSLAN 50 may comprise the control unit 56, which may be implemented as a microcontroller configured to control and monitor the functions of the MSLAN 40. It should be noted, that the optical ports 51.1 and 51.2 as well as the interfaces illustrated herein may be implemented as physical and/or software components. Therefore, the access network device 50 may be configured to deactivate the optical port 51.1 and, if available, the optical port 51.2. In the alternative exemplary communication system 10 optical fiber 100.1 is terminated by the optical access interface 23.1 of the customer router 20 and by the first optical port 51.1 of the access network device 50, wherein optical fiber 100.2, if implemented, is terminated by the optical access interface 23.2 of the customer router 20 and by the optical port 51.2 of the access network device 50.

In this exemplary embodiment, the access network device 50 is configured to deactivate the optical port 53 terminating the optical fiber 100.1, wherein the customer router 20 is configured to transmit a request message for activing the optical port 53 of the access network device 50 via its wireless network interface 25 to the network device 90. The network device 90 in turn may be configured to generate an optical port activating signal in response to the request message received from the customer router 20 and to transmit, via its communication interface 91, the optical port activating signal to the access network device 50. The access network device 50 in turn may be configured to activate the optical port 53 terminating the optical fiber 100. 1.It should be noted that an effective power-saving operation may be achieved, if all optical network terminations connected to the optical port 53 of the access network device 50 are operated in a power-saving mode. Otherwise, the power-saving effect works only on the optical access interfaces 25 of customer router 20.

It should be noted, that the customer router 20 may be configured to deactivate and to activate the access interface 23.1 and 23.2. In particular, control unit 26 may be configured to detect, for example in connection with the motion sensor 28, the behavior of the user of the personal computer 110.

Moreover, the customer router 20 may comprise a wireless broadband access interface 22, which may be implemented as a cellular access interface like a LTE-based interface. In this case, the customer router 20 may be configured to establish for example an Internet session via the wireless broadband access interface 22 using a cellular access network 30. It should be noted that the wireless broadband access interface 22 may be used if, for example, the subscriber lines 23.1 and 23.2 are not available for communication.

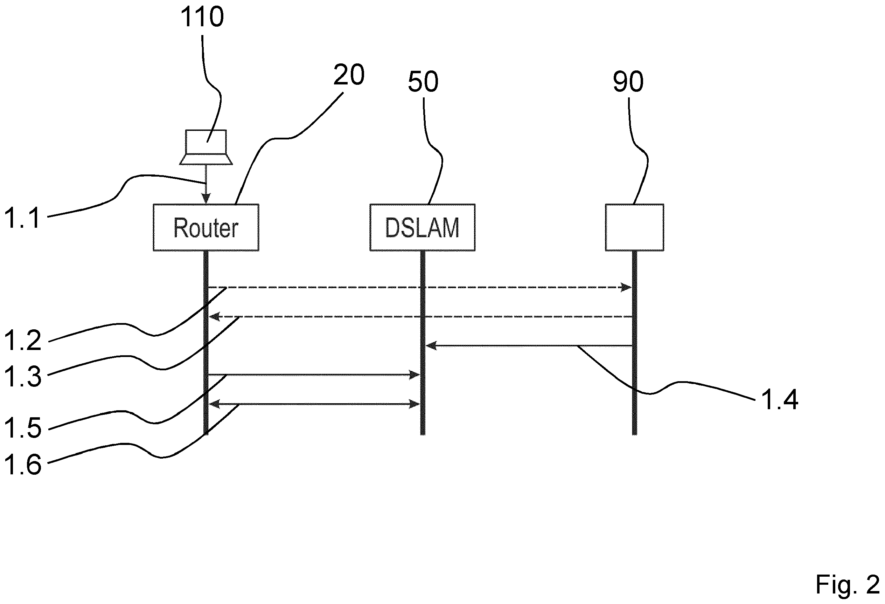

Now the operation of the exemplary communication system 10 is illustrated with respect to different scenarios shown in the Figures 2 to 4.

It should be noted, that the operation of the customer router 20 and the access network device 50 and thus the operation of communication system 10, as illustrated below, is independent of the implementation of
i) the access interfaces 23.1 and 23.2 as xDSL access interfaces or optical interfaces,
ii) the subscriber lines 100.1 and 100.2 as xDSL subscriber lines or optical fibers, and
iii) the ports 51.1 and 51.2 as xDSL ports or optical ports.

### Scenario 1 depicted in Figure 2

For the sake of better understanding and an easier illustration it is assumed with respect to all scenarios illustrated that only the xDSL access interface 23.1 is implemented in the customer router 20, xDSL interface 23.1 is activated and at least two xDSL ports 51.1 and 51.2 are implemented in the access network device 50.

The xDSL interface 23.1 is connected via the xDSL subscriber line 100.1 to xDSL port 51.1 of the DSLAM 50. It is further assumed that the xDSL port 51.1 of the access network device 50 has been deactivated by the control unit 56, for example by using a time scheduler stored in memory 57. For example, the time scheduler triggers the control unit 56 to deactivate xDSL port 51.1 between 9am to 6pm. In addition or alternatively, the control unit 56 may be configured to deactivate xDSL port 51.1 if the customer router 20 is no more in operation since a predefined time interval. Therefore, a timer, which may be integrated in the control unit 56 can trigger the control unit 56 after a predetermined timeout to deactivate xDSL port 51.1.

Now, it is assumed, that the user of PC 110 wishes to get access to the Internet. At step 1.1, this can be initiated by entering a respective request, e.g. by entering a Unified Resource Locater (URL), on the PC 110 and transmitting it to customer router 20. The control unit 26 may be configured to interpret the respective request as an Internet session initiation request. In response to that interpretation the control unit 26 is caused at step 1.2 to generate and transmit a request message for activating the deactivated xDSL port 51.1 via its LPWAN interface 25 and the LPWAN network 40 to the LPWAN interface 93 of the network device 90 which belongs to the ISP network 80. At step 1.3, the network device 90 may acknowledge receipt of the request message and generates in response to the request message received at step 1.2 an xDSL port activating signal. At step 1.4, the network device 20 transmits the xDSL port activating signal generated at step 1.3 via its communication interface 91 to the communication interface 55 of the access network device 50. In response to the xDSL port activating signal the access network device 50 is configured to activate the xDSL port 51.1. It is assumed, that the xDSL access interface 23.1 of the customer router 20 is activated or, for example, has been activated by the control unit 26 in response to the Internet session initiation request entered by the user at the PC 110.

At step 1.5, a DSL training procedure, e.g. a supervectoring training procedure, may be started in a known manner between the customer router 20 and the access network device 50. Once the DSL training is finished the xDSL subscriber line 100.1 is available for data transmission and for example a Real Time Protocol (RTP) data traffic session can be established at step 1.6 using the xDSL subscriber line 100.1. It should be noted, that the DSLAM 50 may be configured to inform the IMS 60 and the server 70, respectively, of the fact, that xDSL subscriber line 100.1 is now available for data transmission. The server 70 may be configured to control transmission of data and/or signaling messages destined for the PC 110 via its communication interface 71 to communication interface 54 of the DSLAM 50, which in turn may forward the data and/or signaling messages to the customer router 20 using the xDSL subscriber line 100.1.

It should be noted that step 1.2, i.e. generating and transmitting a request message for activating the deactivated xDSL port 51.1, may be triggered if the customer router 20 and in particular the motion sensor 28 detects a motion of the user. As a result, the control unit 26 may be configured to generate and transmit a respective request message for activating the deactivating xDSL port 51.1 in response to a respective output of the motion sensor 28, which may be electrically connected to the control unit 26.

It should be noted, that the xDSL access interface 23.1 of the customer router 20 can stay activated all the time or deactivated in response to a time scheduler stored for example in memory 27 of the customer router 20 or in response to at least one predefined event which may be a predetermined signal entered by the user on the PC 110 or automatically generated by the PC 110, indicating for example the termination of a session.

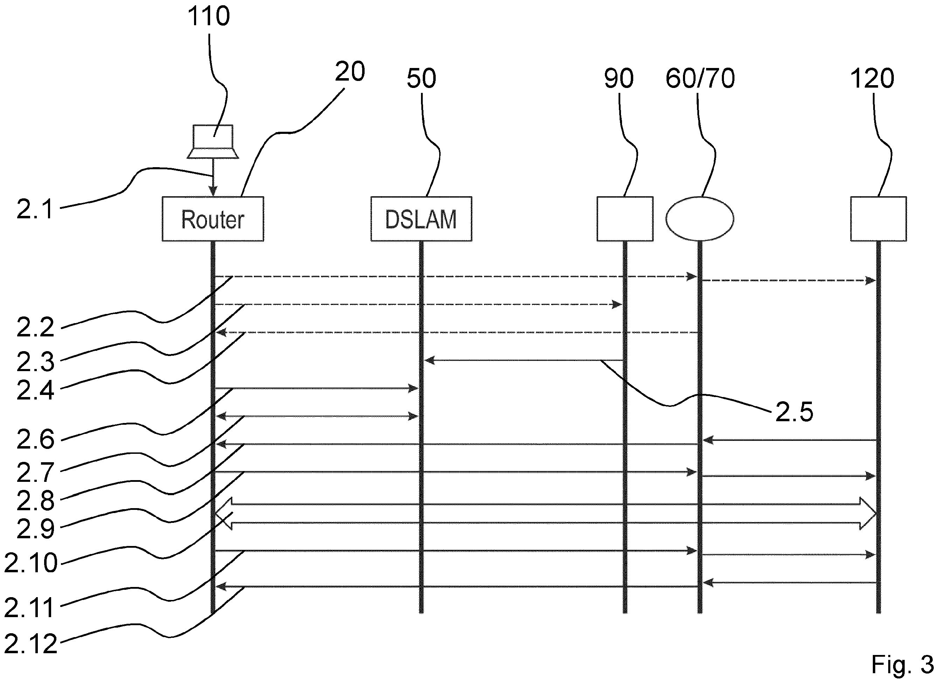

### Scenario 2 depicted in the Figure 3

Now, it is assumed that the user of the PC 110 wants to establish a VoIP session to the SIP capable end device 120 using the known SIP protocol as mentioned above while the xDSL port 51.1 is currently deactivated. It is further assumed, that DSLAM 50 and/or customer router 20 are configured to inform the IP-based communication subsystem 60 and the server 70, respectively, that xDSL port 51.1 associated with xDSL subscriber line 100.1 is currently deactivated so that signaling messages have to be exchanged between the customer router 20 and the server 70 using the LPWAN network 40 instead of the xDSL subscriber line 100.1.

At step 2.1, the user may enter a respective request on the PC 110 which in turn generates in response to the request a respective invite message which is forwarded to the router 20. The control unit 26 is configured to cause the customer router 20 to transmit, at step 2.2, the invite message via its LPWAN interface 25 and the LPWAN network 40 to the IP-based communication subsystem 60 and the server 70, respectively. The server 70 may function as a SIP server configured to forward the invite message to the end device 120 in a known manner. Next, at step 2.3, the customer router 20 generates in response the invite message received from PC 110 a request message for activating the deactivated xDSL port 51.1 of the access network device 50 and transmits the request message via its LPWAN interface 25 over the LPWAN network 40 to the LPWAN interface 93 of the network device 90. According to the SIP protocol the IP-based communication subsystem 60 and in particular the server 70 may transmit, at step 2.4, a 180 ringing message via the LPWAN network 40 to the LPWAN interface 25 of the customer router 20. At step 2.5, the network device 90 generates an xDSL port activating signal in response to the request message received from the customer router 20 and transmits it to the access network device 50. Next, the access network device 50 activates in response to the received xDSL port activating signal its xDSL port 51.1. As explained with respect to scenario 1 an xDSL training procedure may be executed between customer router 20 and access network device 50 at step 2.6. Once the xDSL training is finished at step 2.7 the xDSL subscriber line 100.1 is available for data transmission between the customer router 20 and the DSLAM 50. At step 2.8, a 200 OK message generated by end device 120 can be transmitted via the server 70 using its communication interface 71 to communication interface 54 of the DSLAM 50 and further via the xDSL subscriber line 100.1 and the customer router 20 to the PC 110. At step 2.9, an ACK (Acknowledge) message may be transmitted from the PC 110 via customer router 20, xDSL subscriber line 100.1 and server 70 to the end device 120. At step 2.10, for example a Real Time Protocol (RTP) data traffic session can be established using the xDSL subscriber line 100.1. It should be noted, that the DSLAM 50 may be configured to inform the IMS 60 and the server 70, respectively, of the fact, that xDSL subscriber line 100.1 is now available for data transmission. The server 70 may be configured to control transmission of data and/or signaling messages destined for the PC 110 via its communication interface 71 to communication interface 54 of the DSLAM 50, which in turn may forward the data and/or signaling messages to the customer router 20 using the xDSL subscriber line 100.1.

Once the user of PC 110 terminates the VoIP session a Bye message is transmitted, at step 2.11, from the PC 110 over customer router 20, xDSL subscriber line 100.1, DSLAM 50, server 70 and further to end device 120. Finally, at step 2.12 a 200 OK message is transmitted from end device 120 via server 70, DSLAM 50, xDSL subscriber line 100.1, customer router 20 to PC 110.

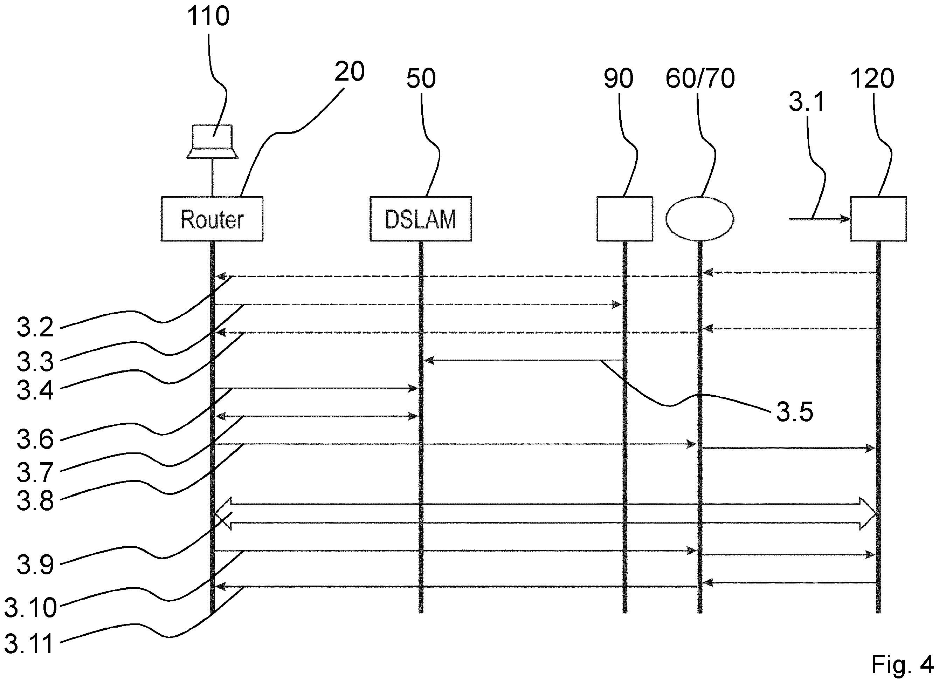

### Scenario 3 depicted in Figure 4

Now, it is assumed that the user of end device 120 will initiate a VoIP session to the user of PC 110, while xDSL subscriber line 100.1 and xDSL port 51.1, respectively, is currently deactivated. It is further assumed, that DSLAM 50 and/or customer router 20 are configured to inform the IP-based communication subsystem 60 and the server 70, respectively, that xDSL port 51.1 associated with xDSL subscriber line 100.1 is currently deactivated so that signaling messages have to be exchanged between the customer router 20 and the server 70 using the LPWAN network 40 instead of the xDSL subscriber line 100.1.

At step 3.1, the user may now enter, for example, the calling number of the user of PC 110 on its end device 120. In response thereto, end device 120 generates at step 3.2 an invite message and transmit it to the server 70, which in turn forwards the invite message via the LPWAN interface 73 and the LPWAN network 40 to the customer router 40 and further to PC 110. Next, at step 3.3, the customer router 20 generates in response the invite message received from end device 120 a request message for activating the deactivated xDSL port 51.1 of the access network device 50 and transmits the request message via its LPWAN interface 25 over the LPWAN network 40 to the LPWAN interface 93 of the network device 90. At step 3.4, a 180 ringing message may be transmitted from end device 120 via server 60, LPWAN network 40 to customer router 20 and further to PC 110. Next, the network device 90 generates an xDSL port activating signal in response to the request message received at step 3.3 from the customer router 20 and transmits it at step 3.5 to the access network device 50. Next, the access network device 50 activates in response to the received xDSL port activating signal its xDSL port 51.1. As explained with respect to scenario 1 an xDSL training procedure may be executed between customer router 20 and access network device 50 at step 3.6. Once the xDSL training is finished the xDSL subscriber line 100.1 is available at step 3.7 for data transmission between the customer router 20 and the DSLAM 50. For example, a Real Time Protocol (RTP) data traffic session can now be established using the xDSL subscriber line 100.1. It should be noted, that the DSLAM 50 may be configured to inform the IMS 60 and the server 70, respectively, of the fact, that xDSL subscriber line 100.1 is now available for data transmission. The server 70 may be configured to control transmission of RTP data traffic and/or signaling messages destined for the PC 110 via its communication interface 71 to communication interface 54 of the DSLAM 50, which in turn may forward the RTP data traffic and/or signaling messages to the customer router 20 using the xDSL subscriber line 100.1.

At step 3.8 a 200 OK message generated by PC 110 can be transmitted via customer router 20, activated xDSL subscriber line 100.1, DSLAM 50, server 70 to end device 120. At step 3.9, Real time Transmission Protocol (RTP) data packets can be exchanged between the PC 110 and the end device 120 using the xDSL subscriber line 100.1.

Once the user of PC 110 terminates the VoIP session a Bye message is transmitted, at step 3.10, from the PC 110 over customer router 20, xDSL subscriber line 100.1, DSLAM 50, server 70 to end device 120. Finally, at step 3.11 a 200 OK message is transmitted from end device 120 via server 70, DSLAM 50, xDSL subscriber line 100.1, customer router 20 to PC 110.

## Claims

1. A method for a power-saving operation of a subscriber line (100.1) terminated by an access interface (23.1) implemented in a customer router (20) and by a port (51.1) implemented in an access network device (50), the customer router (20) further comprising a wireless network interface (25) configured to communicate via a wide-area wireless network (40) with a network device (90) using a wireless network protocol, wherein the method comprises the steps of:
a) deactivating the port (51.1) of the access network device (50) in response to a time scheduler and/or in response to a predefined event, which is detected by the access network device (50);
b) activating the port (51.1) deactivated in step a) by
b1) transmitting, by the customer router (20), a request message for activating the deactivated port (51.1) of the access network device (50) via its wireless network interface (25) to the network device (90);
b2) generating, at the network device (90), a port activating signal in response to the request message of step b1);
b3) transmitting, by the network device (90), the port activating signal generated at step b2) to the access network device (50), and
b4) activating, by the access network device (50), the port deactivated at step a) so that the subscriber line (100.1) will become available for data transmission between the customer router (20) and the access network device (50), wherein the wide-area wireless network (40) is a low-power wide-area radio network, LPWAN, and the wireless network interface (25) of the customer router (20) is a low-power radio network interface configured to communicate via the low-power wide-area radio network LPWAN (40) using a low-power wide-area network protocol.

2. The method of claim 1,
wherein the predefined event at step a) is a user-based behavior, which is detected by the access network device (50) .

3. The method of claim 2,
wherein the user-based behavior comprises the termination of an Internet session or a VoIP session.

4. The method of anyone of the preceding claims,
wherein step a) comprises the step of deactivating the access interface (23.1) of the customer router (20), and
wherein step b) further comprises the step b4) of activating the access interface (23.1) of the customer router (20).

5. The method of anyone of the preceding claims, further comprising the step of transmitting signaling messages via the wireless network interface (25) of the customer router (20) to an IP-based communication subsystem (60) which provides multimedia services and/or receiving, at the wireless network interface (25) of the customer router (20), signaling messages from the IP-based communication subsystem (60), wherein the signaling messages may be Session Initiation Protocol, SIP, messages.

6. The method of anyone of the preceding claims,
wherein step b1) comprises the step of transmitting the request message in response to a time scheduler and/or in response to a predefined event.

7. The method of claim 5 and 6,
wherein step b1) comprises the step of transmitting the request message in response to a signaling message transmitted via the wireless network interface (25) of the customer router (20) to the IP-based communication subsystem (60) or in response to a signaling message received, at the wireless network interface (25) of the customer router (20), from the IP-based communication subsystem (60).

8. The method of any one of the preceding claims,
wherein the access interface (23.1) of the customer router (20) is implemented as an xDSL access interface or as an optical access interface, wherein the subscriber line (100.1) is an xDSL subscriber line or an optical fiber and wherein the port (51.1) of the access network device (50) is an xDSL port or an optical port.

9. A communication system (10) for enabling a power-saving operation of a subscriber line (100.1), comprising:
- a wide-area wireless network (40),
- a network device (90) having a communication interface (91) and a wireless network interface (93) configured to communicate via the wide-area wireless network (40),
- a customer router (20) having a first access interface (23.1) and a wireless network interface (25) configured to communicate via the wide-area wireless network (40) with the network device (90),
- an access network device (50) having a first port (51.1) and a communication interface (55) configured to communicate with the communication interface (91) of the network device (90),
- a first subscriber line (100.1) terminated by the first access interface (23.1) of the customer router (20) and by the first port (51.1) of the access network device (50), wherein
the access network device (50) is configured to deactivate the first port (51.1) terminating the first subscriber line (100.1) in response to a time scheduler and/or in response to a predefined event, wherein the access network device (50) is configured to detect the predefined event, wherein
the customer router (20) is configured to transmit a request message for activating the first port (51.1) of the access network device (50) via its wireless network interface (25) to the network device (90), wherein
the network device (90) is configured to generate a port activating signal in response to the request message received from the customer router (20) and to transmit, via its communication interface (91), the port activating signal to the access network device (50), and wherein
the access network device (50) is configured to activate the first port (51.1) terminating the first subscriber line (100.1), so that the subscriber line (100.1) will become available for data transmission between the customer router (20) and the access network device 50), wherein
the wireless network interface (25) of the customer router (20) and the wireless network interface (93) of the network device (90) are each a low-power radio network interface using a low-power wide-area network protocol, and wherein the wide-area wireless network (40) is a low-power wide-area radio ,LPWAN, network.

10. The communication system of claim 9, wherein the customer router (20) is configured to transmit signaling messages via its wireless network interface (25) to an IP-based communication subsystem (60, 70) configured to provide multimedia services, the IP-based communication system (60, 70) having a wireless network interface (73) configured to receive signaling messages from the customer router (20), wherein the IP-based communication subsystem (60, 70) is further configured to transmit signaling messages via its wireless network interface (73) to the customer router (20), which is configured to receive the signaling messages from the IP-based communication subsystem (60, 70), wherein the signaling messages may be Session Initiation Protocol (SIP) messages.

11. The communication system of anyone of the claims 9 to 10, further comprising a second subscriber line (100.2), wherein
the customer router (20) comprises a second access interface (23.2), wherein the access network device (50) comprises a second port (51.2), wherein
the second subscriber line (100.2) is terminated by the second access interface (23.2) of the customer router (20) and by the second port (51.2) of the access network device (50), wherein
the access network device (50) is configured to deactivate the second port (51.2) terminating the second subscriber line (100.2), wherein
the customer router (20) is configured to transmit a request message for activing the second port (51.2) of the access network device (50) via its wireless network interface (25) to the network device (90), wherein
the network device (90) is configured to generate a port activating signal with respect to the second port (51.2) in response to the request message received from the customer router (20) and to transmit, via its communication interface (91), the port activating signal with respect to the second port (51.2) to the access network device (50), and wherein
the access network device (50) is configured to activate the second port (51.2) terminating the second subscriber line (100.2).

12. The communication system of anyone of the claims 9 to 11, wherein
the first and/or second access interface (23.1, 23.2) of the customer router (20) are implemented each as an xDSL access interface or as an optical access interface, wherein the first and/or second subscriber line (100.1, 100.2) are each an xDSL subscriber line or an optical fiber and wherein the first and/or second port (51.1, 51.2) of the access network device (50) are each an xDSL port or an optical port.

13. The communication system of claim 11 and 12,
wherein
the customer router (20) is configured to deactivate and to activate the first access interface (23.1) and/or the second access interface (23.2).

14. The communication system of anyone of the claims 9 to 13, wherein
the customer router (20) comprises a wireless broadband access interface (22), and wherein
the customer router (20) is configured to establish an Internet session via the wireless broadband access interface (22).

15. The communication system of anyone of the claims 9 to 14,
wherein the customer router (20) is an integrated access device,IAD, and
wherein the access network device (50) is a digital subscriber line access multiplexer,xDSLAM, or an multi-service access node, MSAN.

16. The communication system of anyone of the claims 9 to 15,
wherein the customer router (20) comprises a motion sensor (28) which is configured to detect a motion of a user, wherein
the customer router (20) is configured to generate and transmit the request message for activating the first port (51.1) in response to a respective output of the motion sensor (28) via its wireless network interface (25) to the network device (90).

## Patentansprüche

1. Verfahren für einen energiesparenden Betrieb einer Teilnehmerleitung (100.1), die durch eine in einem Kunden-Router (20) implementierte Zugangsschnittstelle (23.1) und durch einen in einer Zugangsnetzvorrichtung (50) implementierten Port (51.1) abgeschlossen ist, wobei der Kunden-Router (20) ferner eine drahtlose Netzwerkschnittstelle (25) umfasst, die so konfiguriert ist, dass sie über ein drahtloses Weitverkehrsnetzwerk (40) mit einer Netzwerkvorrichtung (90) unter Verwendung eines drahtlosen Netzwerkprotokolls kommuniziert, wobei das Verfahren die folgenden Schritte umfasst:
a) Deaktivieren des Ports (51.1) der Zugangsnetzwerkvorrichtung (50) unter Ansprechen auf einen Zeitplaner und/oder auf ein vordefiniertes Ereignis, das von der Zugangsnetzwerkvorrichtung (50) erkannt wird;
b) Aktivieren des in Schritt a) deaktivierten Ports (51.1) durch
b1) Übertragen, durch den Kundenrouter (20), einer Anforderungsnachricht zum Aktivieren des deaktivierten Ports (51. 1) der Zugangsnetzwerkvorrichtung (50) über dessen drahtlose Netzwerkschnittstelle (25) zur Netzwerkvorrichtung (90);
b2) Erzeugen eines Portaktivierungssignals in der Netzwerkvorrichtung (90) als Reaktion auf die Anforderungsnachricht von Schritt b1);
b3) Übertragen des in Schritt b2) erzeugten Portaktivierungssignals durch die Netzwerkvorrichtung (90) zur Zugangsnetzvorrichtung (50), und
b4) Aktivieren des in Schritt a) deaktivierten Ports durch die Zugangsnetzwerkvorrichtung (50), so dass die Teilnehmerleitung (100.1) für die Datenübertragung zwischen dem Kunden-Router (20) und der Zugangsnetzwerkvorrichtung (50) verfügbar wird, wobei das drahtlose Weitverkehrsnetz (40) ein Niedrigenergie-Weitbereichs-Funknetzwerk, LPWAN, ist, und die drahtlose Netzwerkschnittstelle (25) des Kunden-Routers (20) eine Niedrigenergie-Funknetzwerkschnittstelle ist, die konfiguriert ist, um über das Niedrigenergie-Weitbereichs-Funknetzwerk, LPWAN (40), unter Verwendung eines Niedrigenergie-Weitbereichs-Netzwerkprotokolls zu kommunizieren.

2. Verfahren nach Anspruch 1,
wobei das vordefinierte Ereignis in Schritt a) ein benutzerbasiertes Verhalten ist, das von der Zugangsnetzwerkvorrichtung (50) erkannt wird.

3. Verfahren nach Anspruch 2,
wobei das benutzerbasierte Verhalten die Beendigung einer Internetsitzung oder einer VoIP-Sitzung umfasst.

4. Verfahren nach einem der vorhergehenden Ansprüche,
wobei Schritt a) den Schritt des Deaktivierens der Zugangsschnittstelle (23.1) des Kunden-Routers (20) umfasst, und
wobei Schritt b) weiterhin den Schritt b4) des Aktivierens der Zugangsschnittstelle (23.1) des Kunden-Routers (20) umfasst.

5. Verfahren nach einem der vorhergehenden Ansprüche, das ferner den Schritt des Übertragens von Signalisierungsnachrichten über die drahtlose Netzwerkschnittstelle (25) des Kunden-Routers (20) an ein IP-basiertes Kommunikationsteilsystem (60), das Multimediadienste bereitstellt, und/oder des Empfangens von Signalisierungsnachrichten von dem IP-basierten Kommunikationsteilsystem (60) an der drahtlosen Netzwerkschnittstelle (25) des Kunden-Routers (20) umfasst, wobei die Signalisierungsnachrichten Session Initiation Protocol, SIP, Nachrichten sein können.

6. Verfahren nach einem der vorhergehenden Ansprüche,
wobei Schritt b1) den Schritt der Übertragung der Anforderungsnachricht als Reaktion auf einen Zeitplaner und/oder als Reaktion auf ein vordefiniertes Ereignis umfasst.

7. Verfahren nach Anspruch 5 und 6,
wobei Schritt b1) den Schritt des Übertragens der Anforderungsnachricht als Reaktion auf eine Signalisierungsnachricht, die über die drahtlose Netzwerkschnittstelle (25) des Kundenrouters (20) an das IP-basierte Kommunikationsteilsystem (60) übertragen wird, oder als Reaktion auf eine Signalisierungsnachricht, die an der drahtlosen Netzwerkschnittstelle (25) des Kundenrouters (20) von dem IP-basierten Kommunikationsteilsystem (60) empfangen wird, umfasst.

8. Verfahren nach einem der vorhergehenden Ansprüche,
wobei die Zugangsschnittstelle (23.1) des Kundenrouters (20) als xDSL-Zugangsschnittstelle oder als optische Zugangsschnittstelle ausgeführt ist, wobei die Teilnehmerleitung (100.1) eine xDSL-Teilnehmerleitung oder eine optische Faser ist und wobei der Port (51.1) der Zugangsnetzvorrichtung (50) ein xDSL-Port oder ein optischer Port ist.

9. Kommunikationssystem (10) zum Ermöglichen eines energiesparenden Betriebs einer Teilnehmerleitung (100.1), mit -
ein drahtloses Weitverkehrsnetzwerk (40),
- eine Netzwerkvorrichtung (90) mit einer Kommunikationsschnittstelle (91) und einer drahtlosen Netzwerkschnittstelle (93), die so konfiguriert ist, dass sie über das drahtlose Weitverkehrsnetz (40) kommuniziert,
- einen Kundenrouter (20) mit einer ersten Zugangsschnittstelle (23.1) und einer drahtlosen Netzwerkschnittstelle (25), die so konfiguriert ist, dass sie über das drahtlose Weitverkehrsnetzwerk (40) mit der Netzwerkvorrichtung (90) kommuniziert,
- eine Zugangsnetzwerkvorrichtung (50) mit einem ersten Port (51.1) und einer Kommunikationsschnittstelle (55), die so konfiguriert ist, dass sie mit der Kommunikationsschnittstelle (91) der Netzwerkvorrichtung (90) kommuniziert,
- eine erste Teilnehmerleitung (100.1), die durch die erste Zugangsschnittstelle (23.1) des Kundenrouters (20) und durch den ersten Port (51.1) der Zugangsnetzwerkvorrichtung (50) abgeschlossen wird, wobei die Zugangsnetzwerkvorrichtung (50) konfiguriert ist, den ersten Port (51.1), der die erste Teilnehmerleitung (100.1) abschließt, in Reaktion auf einen Zeitplaner und/oder in Reaktion auf ein vordefiniertes Ereignis zu deaktivieren, wobei die Zugangsnetzwerkvorrichtung (50) konfiguriert ist, das vordefinierte Ereignis zu erkennen, wobei
der Kundenrouter (20) konfiguriert ist, eine Anforderungsnachricht zum Aktivieren des ersten Ports (51.1) der Zugangsnetzwerkvorrichtung (50) über dessen drahtlose Netzwerkschnittstelle (25) an die Netzwerkvorrichtung (90) zu übertragen, wobei
die Netzwerkvorrichtung (90) konfiguriert ist, ein Portaktivierungssignal in Reaktion auf die von dem Kundenrouter (20) empfangene Anforderungsnachricht zu erzeugen und das Portaktivierungssignal über ihre Kommunikationsschnittstelle (91) an die Zugangsnetzwerkvorrichtung (50) zu übertragen, und wobei
die Zugangsnetzwerkvorrichtung (50) konfiguriert ist, den ersten Port (51.1) zu aktivieren, der die erste Teilnehmerleitung (100.1) abschließt, so dass die Teilnehmerleitung (100.1) für die Datenübertragung zwischen dem Kundenrouter (20) und der Zugangsnetzwerkvorrichtung (50) verfügbar wird, wobei
die drahtlose Netzwerkschnittstelle (25) des Kundenrouters (20) und die drahtlose Netzwerkschnittstelle (93) der Netzwerkvorrichtung (90) jeweils eine Niedrigenergie-Funknetzwerkschnittstelle sind, die ein Niedrigenergie-Weitverkehrsnetzwerkprotokoll verwendet, und wobei das drahtlose Weitverkehrsnetzwerk (40) ein Niedrigenergie-Weitbereichsfunknetzwerk, LPWAN, ist.

10. Kommunikationssystem nach Anspruch 9, wobei der Kunden-Router (20) so konfiguriert ist, dass er Signalisierungsnachrichten über seine drahtlose Netzwerkschnittstelle (25) an ein IP-basiertes Kommunikationsteilsystem (60, 70) überträgt, das so konfiguriert ist, dass es Multimediadienste bereitstellt, wobei das IP-basierte Kommunikationssystem (60, 70) eine drahtlose Netzwerkschnittstelle (73) aufweist, die konfiguriert ist, Signalisierungsnachrichten vom Kunden-Router (20) zu empfangen, wobei das IP-basierte Kommunikationssubsystem (60, 70) ferner konfiguriert ist, Signalisierungsnachrichten über seine drahtlose Netzwerkschnittstelle (73) an den Kundenrouter (20) zu übertragen, der konfiguriert ist, die Signalisierungsnachrichten von dem IP-basierten Kommunikationsteilsystem (60, 70) zu empfangen, wobei die Signalisierungsnachrichten Session Initiation Protocol, SIP, Nachrichten sein können.

11. Kommunikationssystem nach einem der Ansprüche 9 bis 10, ferner mit
einer zweiten Teilnehmerleitung (100.2), wobei
der Kundenrouter (20) eine zweite Zugangsschnittstelle (23.2) aufweist, wobei die Zugangsnetzwerkvorrichtung (50) einen zweiten Port (51.2) aufweist, wobei die zweite Teilnehmerleitung (100.2) durch die zweite Zugangsschnittstelle (23.2) des Kundenrouters (20) und durch den zweiten Port (51.2) der Zugangsnetzwerkvorrichtung (50) abgeschlossen ist, wobei die Zugangsnetzwerkvorrichtung (50) konfiguriert ist, den zweiten Port (51.2), der die zweite Teilnehmerleitung (100.2) abschließt, zu deaktivieren, wobei der Kundenrouter (20) konfiguriert ist, eine Anforderungsnachricht zum Aktivieren des zweiten Ports (51.2) der Zugangsnetzwerkvorrichtung (50) über seine drahtlose Netzwerkschnittstelle (25) an die Netzwerkvorrichtung (90) zu übertragen, wobei
die Netzwerkvorrichtung (90) konfiguriert ist, ein Portaktivierungssignal in Bezug auf den zweiten Port (51.2) unter Ansprechen auf die von dem Kundenrouter (20) empfangene Anforderungsnachricht zu erzeugen und über ihre Kommunikationsschnittstelle (91) das Portaktivierungssignal in Bezug auf den zweiten Port (51.2) an die Zugangsnetzwerkvorrichtung (50) zu übertragen, und wobei
die Zugangsnetzwerkvorrichtung (50) konfiguriert ist, den zweiten Port (51.2) zu aktivieren, der die zweite Teilnehmerleitung (100.2) abschließt.

12. Kommunikationssystem nach einem der Ansprüche 9 bis 11, wobei die erste und/oder zweite Zugangsschnittstelle (23.1, 23.2) des Kundenrouters (20) jeweils als xDSL-Zugangsschnittstelle oder als optische Zugangsschnittstelle ausgeführt sind, wobei die erste und/oder zweite Teilnehmerleitung (100.1, 100.2) jeweils eine xDSL-Teilnehmerleitung oder eine optische Faser ist und wobei der erste und/oder zweite Port (51.1, 51.2) der Zugangsnetzeinrichtung (50) jeweils ein xDSL-Port oder ein optischer Port ist.

13. Kommunikationssystem nach Anspruch 11 und 12,
wobei
der Kundenrouter (20) konfiguriert ist, die erste Zugangsschnittstelle (23.1) und/oder die zweite Zugangsschnittstelle (23.2) zu deaktivieren und zu aktivieren.

14. Kommunikationssystem nach einem der Ansprüche 9 bis 13, wobei
der Kunden-Router (20) eine drahtlose Breitband-Zugangsschnittstelle (22) umfasst, und wobei
der Kunden-Router (20) konfiguriert ist, eine Internet-Sitzung über die drahtlose Breitband-Zugangsschnittstelle (22) aufbauen.

15. Kommunikationssystem nach einem der Ansprüche 9 bis 14,
wobei der Kundenrouter (20) ein integriertes Zugangsgerät, LAD, ist und wobei die Zugangsnetzwerkvorrichtung (50) ein digitaler Teilnehmerleitungs-Zugangsmultiplexer, xDSLAM oder ein Multi-Service-Zugangsknoten, MSAN, ist.

16. Kommunikationssystem nach einem der Ansprüche 9 bis 15,
wobei der Kunden-Router (20) einen Bewegungssensor (28) umfasst, der konfiguriert ist, eine Bewegung eines Benutzers zu erfassen, wobei der Kunden-Router (20) konfiguriert ist, die Anforderungsnachricht zum Aktivieren des ersten Ports (51.1) unter Ansprechen auf eine entsprechende Ausgabe des Bewegungssensors (28) zu erzeugen und diese über seine drahtlose Netzwerkschnittstelle (25) an die Netzwerkvorrichtung (90) zu übertragen.

## Revendications

1. Procédé pour un fonctionnement à économie d'énergie d'une ligne d'abonné (100.1) ayant pour terminaison une interface d'accès (23.1) implémentée dans un routeur client (20) et par un port (51.1) implémenté dans un dispositif de réseau d'accès (50), le routeur client (20) comprenant en outre une interface de réseau sans fil (25) configurée pour communiquer via un réseau sans fil étendu (40) avec un dispositif de réseau (90) en utilisant un protocole de réseau sans fil, dans lequel le procédé comprend les étapes suivantes :
a) la désactivation du port (51.1) du dispositif de réseau d'accès (50) en réponse à un planificateur de temps et/ou en réponse à un événement prédéfini, qui est détecté par le dispositif de réseau d'accès (50) ;
b) l'activation du port (51.1) désactivé à l'étape a) en
b1) transmettant, par le routeur client (20), un message de requête d'activation du port désactivé (51.1) du dispositif de réseau d'accès (50) via son interface de réseau sans fil (25) au dispositif de réseau (90) ;
b2) générant, au niveau du dispositif de réseau (90), un signal d'activation de port en réponse au message de requête de l'étape b1) ;
b3) transmettant, par le dispositif de réseau (90), le signal d'activation de port généré à l'étape b2) au dispositif de réseau d'accès (50), et
b4) activant, par le dispositif de réseau d'accès (50), le port désactivé à l'étape a) de sorte que la ligne d'abonné (100.1) devienne disponible pour la transmission de données entre le routeur client (20) et le dispositif de réseau d'accès (50),
dans lequel le réseau sans fil étendu (40) est un réseau radio étendu à faible puissance, LPWAN, et l'interface de réseau sans fil (25) du routeur client (20) est une interface de réseau radio de faible puissance configurée pour communiquer via le réseau radio étendu de faible puissance LPWAN (40) à l'aide d'un protocole de réseau étendu de faible puissance.

2. Procédé selon la revendication 1,
dans lequel l'événement prédéfini à l'étape a) est un comportement se basant sur l'utilisateur, qui est détecté par le dispositif de réseau d'accès (50).

3. Procédé selon la revendication 2,
dans lequel le comportement se basant sur l'utilisateur comprend la fin d'une session Internet ou d'une session VoIP.

4. Procédé selon l'une quelconque des revendications précédentes,
dans lequel l'étape a) comprend l'étape de désactivation de l'interface d'accès (23.1) du routeur client (20), et
dans lequel l'étape b) comprend en outre l'étape b4) d'activation de l'interface d'accès (23.1) du routeur client (20) .

5. Procédé selon l'une quelconque des revendications précédentes, comprenant en outre l'étape de transmission de messages de signalisation via l'interface de réseau sans fil (25) du routeur client (20) à un sous-système de communication basé sur IP (60) qui fournit des services multimédias et/ou recevoir, au niveau de l'interface de réseau sans fil (25) du routeur client (20), des messages de signalisation provenant du sous-système de communication basé sur IP (60), dans lequel les messages de signalisation peuvent être des messages de protocole d'initiation de session, SIP.

6. Procédé selon l'une quelconque des revendications précédentes,
dans lequel l'étape b1) comprend l'étape de transmission du message de requête en réponse à un planificateur de temps et/ou en réponse à un événement prédéfini.

7. Procédé selon les revendications 5 et 6,
dans lequel l'étape b1) comprend l'étape de transmission du message de requête en réponse à un message de signalisation transmis via l'interface de réseau sans fil (25) du routeur client (20) au sous-système de communication basé sur IP (60) ou en réponse à un message de signalisation reçu, au niveau de l'interface de réseau sans fil (25) du routeur client (20), à partir du sous-système de communication basé sur IP (60).

8. Procédé selon l'une quelconque des revendications précédentes,
dans lequel l'interface d'accès (23.1) du routeur client (20) est implémentée comme étant une interface d'accès xDSL ou comme étant une interface d'accès optique, dans lequel la ligne d'abonné (100.1) est une ligne d'abonné xDSL ou une fibre optique et dans lequel le port (51.1) du dispositif de réseau d'accès (50) est un port xDSL ou un port optique.

9. Système de communication (10) pour permettre un fonctionnement à économie d'énergie d'une ligne d'abonné (100.1), comprenant :
- un réseau sans fil étendu (40),
- un dispositif de réseau (90) ayant une interface de communication (91) et une interface de réseau sans fil (93) configurée pour communiquer via le réseau sans fil étendu (40),
- un routeur client (20) ayant une première interface d'accès (23.1) et une interface de réseau sans fil (25) configurée pour communiquer via le réseau sans fil étendu (40) avec le dispositif de réseau (90),
- un dispositif de réseau d'accès (50) ayant un premier port (51.1) et une interface de communication (55) configurée pour communiquer avec l'interface de communication (91) du dispositif de réseau (90),
- une première ligne d'abonné (100.1) ayant pour terminaison la première interface d'accès (23.1) du routeur client (20) et par le premier port (51.1) du dispositif de réseau d'accès (50), dans lequel
le dispositif de réseau d'accès (50) est configuré pour désactiver le premier port (51.1) constituant la terminaison de la première ligne d'abonné (100.1) en réponse à un planificateur de temps et/ou en réponse à un événement prédéfini, dans lequel le dispositif de réseau d'accès (50) est configuré pour détecter l'événement prédéfini, dans lequel
le routeur client (20) est configuré pour transmettre un message de requête pour activer le premier port (51.1) du dispositif de réseau d'accès (50) via son interface de réseau sans fil (25) au dispositif de réseau (90), dans lequel
le dispositif de réseau (90) est configuré pour générer un signal d'activation de port en réponse au message de requête reçu à partir du routeur client (20) et pour transmettre, via son interface de communication (91), le signal d'activation de port au dispositif de réseau d'accès (50), et dans lequel
le dispositif de réseau d'accès (50) est configuré pour activer le premier port (51.1) constituant la terminaison de la première ligne d'abonné (100.1), de sorte que la ligne d'abonné (100.1) devienne disponible pour la transmission de données entre le routeur client (20) et le dispositif de réseau d'accès 50), dans lequel
l'interface de réseau sans fil (25) du routeur client (20) et l'interface de réseau sans fil (93) du dispositif de réseau (90) sont chacune une interface de réseau radio de faible puissance utilisant un protocole de réseau étendu de faible puissance, et dans lequel le réseau sans fil étendu (40) est un réseau radio étendu de faible puissance, LPWAN.

10. Système de communication selon la revendication 9, dans lequel le routeur client (20) est configuré pour transmettre des messages de signalisation via son interface de réseau sans fil (25) à un sous-système de communication basé sur IP (60, 70) configuré pour fournir des services multimédias, le système de communication basé sur IP (60, 70) ayant une interface de réseau sans fil (73) configurée pour recevoir des messages de signalisation à partir du routeur client (20), dans lequel le sous-système de communication basé sur IP (60, 70) est en outre configuré pour transmettre des messages de signalisation via son interface de réseau sans fil (73) au routeur client (20), qui est configuré pour recevoir les messages de signalisation du sous-système de communication basé sur IP (60, 70), dans lequel les messages de signalisation peuvent être des messages de protocole d'initiation de session (SIP).

11. Système de communication selon l'une quelconque des revendications 9 et 10, comprenant en outre
une deuxième ligne d'abonné (100.2), dans lequel
le routeur client (20) comprend une deuxième interface d'accès (23.2), dans lequel le dispositif de réseau d'accès (50) comprend un deuxième port (51.2), dans lequel
la deuxième ligne d'abonné (100.2) a pour terminaison la deuxième interface d'accès (23.2) du routeur client (20) et par le deuxième port (51.2) du dispositif de réseau d'accès (50), dans lequel
le dispositif de réseau d'accès (50) est configuré pour désactiver le deuxième port (51.2) constituant la terminaison de la deuxième ligne d'abonné (100.2), dans lequel
le routeur client (20) est configuré pour transmettre un message de requête pour activer le deuxième port (51.2) du dispositif de réseau d'accès (50) via son interface de réseau sans fil (25) au dispositif de réseau (90), dans lequel
le dispositif de réseau (90) est configuré pour générer un signal d'activation de port par rapport au deuxième port (51.2) en réponse au message de requête reçu à partir du routeur client (20) et pour transmettre, via son interface de communication (91), le signal d'activation de port par rapport au deuxième port (51.2) au dispositif de réseau d'accès (50), et dans lequel
le dispositif de réseau d'accès (50) est configuré pour activer le deuxième port (51.2) constituant la terminaison de la deuxième ligne d'abonné (100.2).

12. Système de communication selon l'une quelconque des revendications 9 à 11, dans lequel la première et/ou la deuxième interface d'accès (23.1, 23.2) du routeur client (20) sont implémentées chacune comme étant une interface d'accès xDSL ou comme étant une interface d'accès optique, dans lequel la première et/ou la deuxième ligne d'abonné (100.1, 100.2) sont chacune une ligne d'abonné xDSL ou une fibre optique et dans lequel le premier et/ou le deuxième port (51.1, 51.2) du dispositif de réseau d'accès (50) sont chacun un port xDSL ou un port optique.

13. Système de communication selon les revendications 11 et 12,
dans lequel
le routeur client (20) est configuré pour désactiver et pour activer la première interface d'accès (23.1) et/ou la deuxième interface d'accès (23.2).

14. Système de communication selon l'une quelconque des revendications 9 à 13, dans lequel
le routeur client (20) comprend une interface d'accès haut débit sans fil (22), et dans lequel
le routeur client (20) est configuré pour établir une session Internet via l'interface d'accès haut débit sans fil (22) .

15. Système de communication selon l'une quelconque des revendications 9 à 14,
dans lequel le routeur client (20) est un dispositif d'accès intégré, IAD, et
dans lequel le dispositif de réseau d'accès (50) est un multiplexeur d'accès de ligne d'abonné numérique, xDSLAM ou un noeud d'accès multi-service, MSAN.

16. Système de communication selon l'une quelconque des revendications 9 à 15,
dans lequel le routeur client (20) comprend un capteur de mouvement (28) qui est configuré pour détecter un mouvement d'un utilisateur, dans lequel
le routeur client (20) est configuré pour générer et transmettre le message de requête d'activation du premier port (51.1) en réponse à une sortie respective du capteur de mouvement (28) via son interface de réseau sans fil (25) au dispositif de réseau (90).
